# EUROPEAN PATENT SPECIFICATION

(11) **EP 2 574 698 B1**
(45) Date of publication and mention of the grant of the patent: **02.04.2014**
(21) Application number: 11183464.4
(22) Date of filing: 30.09.2011
(51) Int. Cl.: E02D 7/02

(54) **Method and device for driving a multiplicity of piles into a seabed**
Verfahren und Vorrichtung zum Treiben von mehreren Pfählen in den Meeresgrund
Procédé et dispositif pour entraîner plusieurs piliers au fond de la mer

(43) Date of publication of application: 03.04.2013
(73) Proprietor: Siemens Aktiengesellschaft, 80333 München (DE)
(72) Inventor: Lynderup, Henrik Fomsgaard, 8832 Skals (DK); Østergaard, Thomas, 6000 Kolding (DK)

(56) References cited:
- EP-A1- 0 699 803
- EP-A1- 1 621 677
- GB-A- 2 448 358
- GB-A- 2 469 190
- US-A- 4 131 166
- US-A- 4 904 119
- US-A1- 2011 170 956

## Description

The invention relates to a method and a device for driving a multiplicity of piles into a seabed, according, respectively, to the preamble of claims 1 and 8. The preamble of claims 1 and 8 is disclosed in document GB 2448358, which represent the closest prior art.

For offshore wind power systems a firm connection of the wind power system to the seabed is required. Steel lattice constructions which rest on piles driven into the seabed are readily used. This takes place by means of pile-drivers or hammers, e.g. IHC-hammers. Such a hammer is known from the brochure "Menck-Hydraulic Hammers" of the company MENCK GmbH. The hammer is mounted on the individual piles and put into operation, by means of which one pile after the other is driven into the seabed. After the first pile has been hammered in, the hammer is raised and once again positioned on the top of the further pile to be hammered in, which is time-consuming in the case of great sea depth. A pile is for example embodied as a cylindrical pipe, which can taper at its tip.

EP 1 621 677 A1 describes an arrangement for installing building elements, such as piles and tunnel sections, into a ground formation, which arrangement comprises such a building element. Two or more impact drivers for delivering blows to the element are mounted on or operatively connected to the element. With the invention, large elements, such as monopoles for wind turbines, which may comprise a steel tube having a diameter in excess of 5 meters, or even tunnel sections, can be installed by means of a number of relatively small impact drivers.

US 2011/0170956 A1 relates to an efficient method of providing a foundation for an elevated mass, such as the jacket of a wind mill, the foundation consists of a plurality of piles, driven into a substrate according to a geometric pattern. The method an assembly of a jack-up platform and a frames template, the template having a plurality of interconnected sleeves guide members for receiving the piles, arranged according to the geometric pattern, and means for slidably moving it along the spud poles of the platform. The framed template is lowered along the spud poles from an inoperative position close to the deck of the platform towards the substrate, and piles driven into the substrate through the sleeve guide members of the template. The document also describes a framed template and to an assembly of a jack-up platform and a framed template, adapted for carrying out the method.

EP 0699803 A1 discloses an offshore oil platform which comprises a hull carries by legs provided with feet adapted to rest on the sea bed. Walls of each of the legs define a space opening onto the respective foot in which there are retracted anchoring piles for the leg carried by the food. Each leg is also provided in its upper part with support means in vertical alignment with the piles within the space defined by the walls of the leg for supporting a device for driving the piles into the sea bed.

GB 2469190 A describes a column or pile, such as for mounting a turbine in water, that may be lowered by a winch from a surface vessel onto the bed of a lake, sea or river on a platform with drilling machine having operational connections to the vessel via umbilicals. Telescopic legs adjust the platform to a horizontal position prior to a rotary drill drive screwing the pile/column vertically into the formation. The drilling unit and guide tube may be moved relative to the platform to screw in further piles prior to being retrieved to the surface vessel, leaving the piles in situ. A second embodiment discloses a floating platform towable behind the vessel which may be submersed to drill the piles.

US 4131166 A describes that in a pile driving device for driving a pile particularly into a soil located beneath a body of water, said device mainly comprising a hammer and suspension means for suspending the guide frame to a lifting device, said guide frame comprising a base piece surrounding the pile with sliding fit and at least one guide stay fastened to said base for guiding the hammer, that suspension means engage the hanger of the lifting device in a vertical plane of suspension extending transversely of the guide frame and located near the center of gravity of the driving device. During the pile driving operation almost the whole weight of the driving device hangs upon the derrick, so that this weight does not expose the pile to bending forces. The danger of buckling of the pile is reduced as a result.

US 4904119 A describes a method for installing a piling of a predetermined target depth in the ground, particularly on the ocean floor. A pipe is lowered into the ground together with a drilling machine having rotatable cutters movable from a first position in which their transverse dimension is less the inner diameter of the pipe to a second position in which their transverse dimension is greater than the outer diameter if the pipe. The cutters are lowered to a location below the pipe, moved to the second position, and rotated to drill a hole having a diameter larger than the outer diameter of the pipe. After the cutters are retracted and the drilling machine is raised back within the pipe, the pipe and drilling machine are lowered to the bottom of the hole. The steps are repeated until the total target depth is reached. The drilling machine is then removed and the annular space between the wall of the hole and the exterior surface of the pipe is filled with cement.

It is the object of the invention to provide a device for driving a multiplicity of piles into the seabed, which operates in a rapid and cost-effective manner.

The object of the invention is achieved by means of the features of the independent claims 1 and 8.

Advantageous embodiments and developments of the invention are listed in the dependent claims.

In the method for driving a multiplicity of pipes or piles into the seabed the following method steps are performed:
a) Introduction and fixing of the piles at their seabed-side end area in the respective frame elements of a frame,
b) Attachment of hammers to the respective seabed-side end areas of the piles assigned to them in each case,
c) Lowering of the frame with the piles to the seabed;
d) Hammering or driving of the piles into the seabed by means of the hammers,
e) Laying, contacting, attachment, latching or hooking-up (?) of the hammers onto or into the frame elements assigned to them in each case, after the respective piles have been hammered into the seabed,
f) Raising of the frame with the hammers to the surface.

Preferably, the hammers are attached on the top side of the piles, as the frame is lowered to a suitable position.

By means of this method rapid driving of a multiplicity of piles into the seabed is advantageously realized, wherein only after once being lowered to the seabed and raised to the surface in one step are the hammers and the frame rapidly available for further driving-in processes.

After the introduction and positioning of the piles into the frame elements, the frame with the piles is preferably lowered from the surface at least partially in the direction of the seabed.

The hammering or driving-in of a multiplicity of piles into the seabed is preferably performed in parallel.

The Laying, contacting, attachment, latching or hooking-up of the hammers in the frame elements preferably takes place by means of mutually corresponding form-fitted or force-fitted connecting or coupling elements at the respective ends of the hammers and the frame elements facing each other, by means of which secure lifting of the frame with the hammers is possible.

A multiplicity of frame elements are in each case preferably at a prescribed distance from each other, by means of which the piles can be driven into the seabed in a prescribed geometry.

The frame, the piles and the hammers are preferably stored on a seaborne vessel, conveyed from this to the planned position on seabed or hammering position and there hammered into the seabed according to the aforementioned method, wherein piles for a multiplicity of foundation positions or WTG positions are preferably stored on the seaborne vessel.

A wind turbine substructure, e.g. a steel lattice construction is preferably positioned on the piles via lances, and connected by cementing or pointing.

In the device for driving a multiplicity of pipes or piles into the seabed a frame is provided, by means of whose preferably cylindrically embodied frame elements, a multiplicity of piles can be guided and shifted into place, while held at a prescribed drilling, hammering or pile distance and in an axial direction. Here a multiplicity of hammers or pile-drivers are provided, wherein each hammer is arranged on an end area of a pile facing away from the seabed, wherein the respective frame-side ends of the hammers and the hammer-side ends of the frame elements have mutually corresponding, preferably mechanically complementary connecting or coupling elements, so that after the driving-in of the respective pile into the seabed the hammers rest in such a stable manner on the respective frame elements, that the frame together with the hammers lying on the frame elements can be raised from the seabed to the surface of the water and to the board of the seaborne vessel.

The frame can preferably be lowered to the seabed and raised to the surface again by means of winches arranged on a seaborne vessel.

The coupling element of the hammer preferably has a frustoconical or conical outer surface, which can preferably be set positively on the corresponding frustoconical inner surface of the coupling element of the frame element.

On its face, the coupling element of the hammer has a shape preferably embodied as grooves, which can be connected in a form-fitted manner to a form of the face of the coupling element preferably embodied as pins.

On its face the coupling element of the hammer can preferably be connected to the face of the coupling element by means of the gravitational force of the hammer, or a force-fitted connection.

The frame can preferably be conveyed between the surface und the seabed by a winch arranged on a seaborne vessel.

Further embodiments and developments of the invention are represented in the figures:

Wherein:
- Figure 1:: shows a frame for the guidance of piles into frame elements in an oblique 3D view,
- Figure 2:: shows a pile guided in a frame element with a hammer in a side view,
- Figure 3:: shows a further exemplary embodiment of a pile guided in a frame element with a hammer from Figure 2,
- Figure 4:: shows a device for driving piles into the seabed before the first method step,
- Figure 5:: shows the device for driving piles into the seabed after the first method step,
- Figure 6:: shows the device for driving piles into the seabed after the second method step,
- Figure 7:: shows the device for driving a pile into the seabed after the third method step,
- Figure 8a, 8b:: show the device for driving piles into the seabed after the fourth method step,
- Figure 9:: shows the positioning of a steel lattice construction on the piles,
- Figure 10:: shows the connection of the steel lattice construction from Figure 9 to the piles.

In the following text, components of the devices shown which have the same function are indicated by the same reference character.

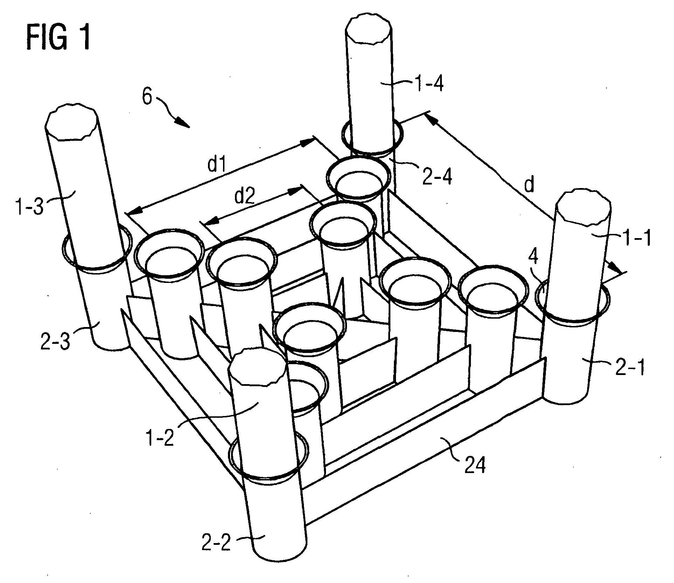

Figure 1 shows a frame 6 with frame elements 2-1, 2-2, 2-3, 2-4 obliquely from above in a 3D view. The frame elements are essentially embodied in cylindrical form in each case with a frustoconical guide attachment 4. The frame elements 2-1, 2-2, 2-3, 2-4 serve to accept and guide piles 1-1, 1-2, 1-3, 1-4 in their axial direction. The frame elements 2-1, 2-2, 2-3, 2-4 are interconnected in a rigid and stable manner by spacers 24. The corners of four frame elements 2-1, 2-2, 2-3, 2-4 preferably form a square with sides of length d. Alternatively, the frame could also be of triangular or other shapes, according to the shape of the requested substructure of the wind turbine tower.

In the present case, three square frame corner elements x-1,x-2,x-3,x-4 arranged within each other are present, so that three squares in each case with four corner points x-1,x-2,x-3,x-4 are embodied, which have distances d2, d1, d or lateral lengths d2, d1, d which increase from inside to outside. Other geometries for the frame elements are also conceivable, for example in the form of rectangles or other polygons. The frame 6 serves as a template for the piles 1, which are shown being driven into the seabed 11 in the subsequent figures. Different geometries can thus advantageously be realized in the drilling field on the seabed 11 with one frame 6. Here frame 6, together with the piles 1-1,1-2,1-,1-4 guided into its frame elements 2, is positioned on the seabed 11. The frame 6 holds the piles 1-1,1-2,1-,1-4 in position for hammering. The piles are not fixed in the vertical degree of freedom. The piles 1-1,1-2,1-,1-4 are then driven into the seabed 11 by a hammer 3, as described in greater detail below.

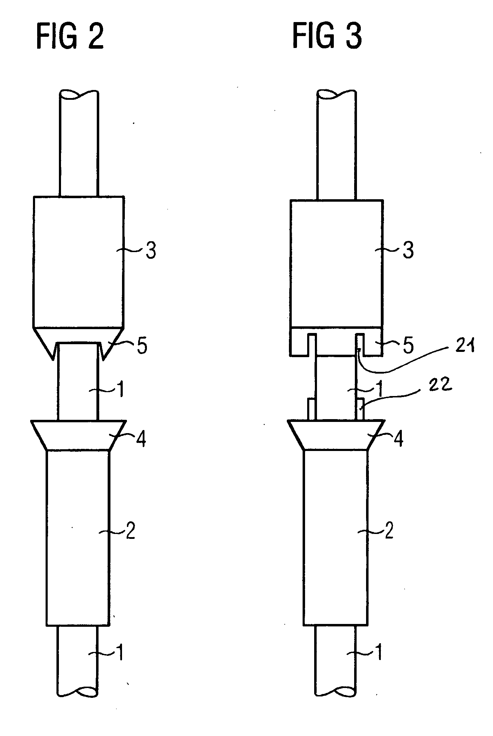

Figure 2 shows a frame element 2 of a frame 6, into which a pile 1 is inserted, guided in its axial direction. Arranged on the pile 1 is a hammer 3 for driving the pile 1 into the seabed 11. After driving of the pile 1 into the seabed 11, the hammer 3 rests on the guide attachment 4 of the frame element 2.

The face 5 of the hammer 3 assigned to the frame element 2 here has a frustoconical outer surface 5, which abuts or engages into the corresponding, frustoconically extending inner surface of the hammer-side guide attachment 4 of the frame element 2.

As a result of the great weight of the hammer 3 and/or the form-fitted frustoconical shape of the coupling elements 4 and 5, the hammer 3 rests on the frame element 2 in such a stable manner that the frame 6 with all the hammers 3 lying on its frame element 2 can in each case be conveyed from the seabed 11 to the surface of the water and the seaborne vessel 13 by means of a winch 23 attached to each frame element 2.

Figure 3 represents the device from Figure 2 in a side view with alternative coupling elements 4-1, 5-1 of the hammer 3 and of the frame element 2, wherein the coupling element 5-1 of the hammer 3 represents an attachment 5-1 in cylindrical form, which has circumferential, evenly-spaced transverse grooves 21 at its face. On the hammer side, the coupling element 4-1 of the frame element 2 has pins 22 at its face, which are embodied in complementary form to the grooves 21 of the coupling element 5-1 of the hammer 3 and thus achieve a stable connection after positioning of the hammer 3 on the frame element 2.

Alternatively (not shown) the attachment 5-1 of the coupling element is embodied in conical form, matching the conical embodiment of the coupling element 4-1 of the frame element 2.

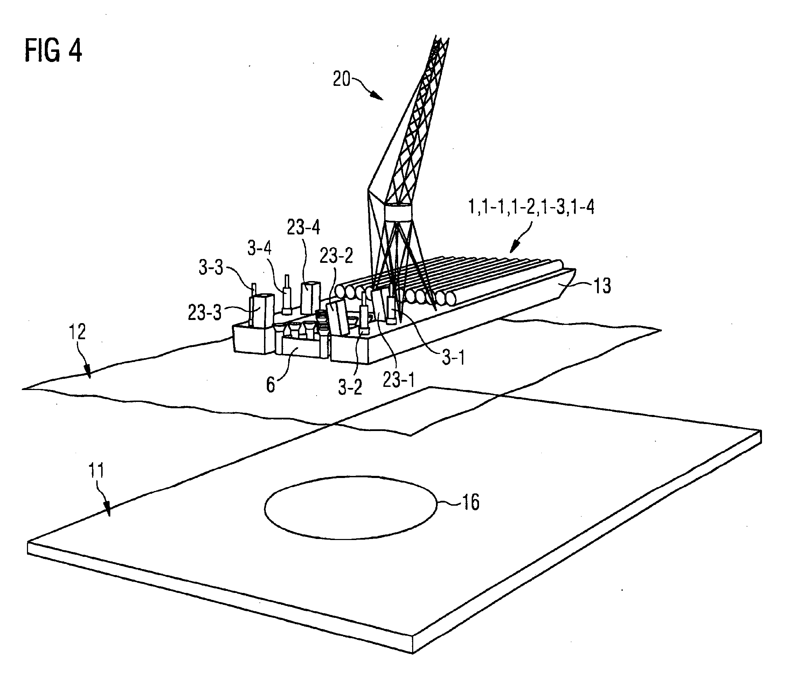

The Figures 4 to 8a represent a device for driving a multiplicity of piles 1-1, 1-2, 1-3, 1-4 into the seabed 11 in successive manufacturing states.

Figure 4 represents a device for driving piles 1-1, 1-2, 1-3, 1-4 into the seabed 11. A seaborne vessel 13 is moored in a fixed position over the selected position on seabed 16 or hammering position 16 of the seabed 11. Stored on the seaborne vessel 13 are winches 23-1, 23-2, 23-3, 23-4, piles 1, 1-1, 1-2, 1-3, 1-4, a frame 6, a crane 20, hammers 3-1, 3-2, 3-3, 3-4. The seaborne vessel 13 floats on the surface 12. The seaborne vessel 13 contains all parts necessary for the pile-driving process, and can thus reach any point on the surface through the use of its powerful engines, in order to be able to halt in the target area exactly over the position on seabed 16 or hammering position 16, also called drilling field 16, in order to form a precisely positioned and stable drilling platform.

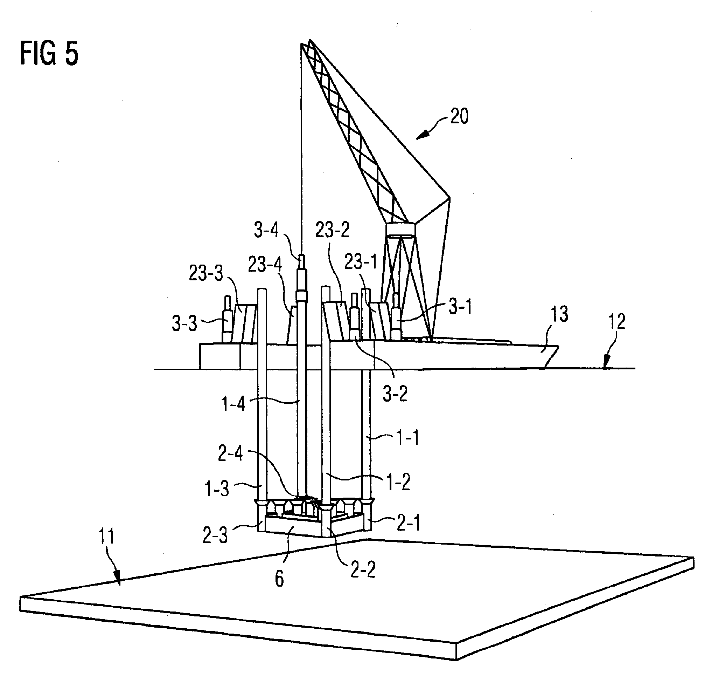

Figure 5 shows the device from Figure 4 in a first method step. The frame elements 2-1, 2-2, 2-3, 2-4 of the frame 6 have been provided and fixed with the four piles 1-1, 1-2, 1-3, 1-4 to be driven into the seabed 11. Alternatively, often three piles or sometimes five piles are used. The frame 6, together with the piles 1-1, 1-2, 1-3, 1-4, is lowered by the winches 23-1, 23-2, 23-3, 23-4 attached to its frame elements 2-1, 2-2, 2-3, 2-4 so far that the crane 20 arranged on the seaborne vessel 13 positions the respective hammers 3-1, 3-2, 3-3, 3-4 successively on the ends of the piles 1-1, 1-2, 1-3, 1-4 facing away from the frame 6. Winches 23-1, 23-2, 23-3, 23-4 and the crane 20 are here anchored in a stable manner onto the seaborne vessel 13. Alternatively, the crane could also be integrated on the vessel.

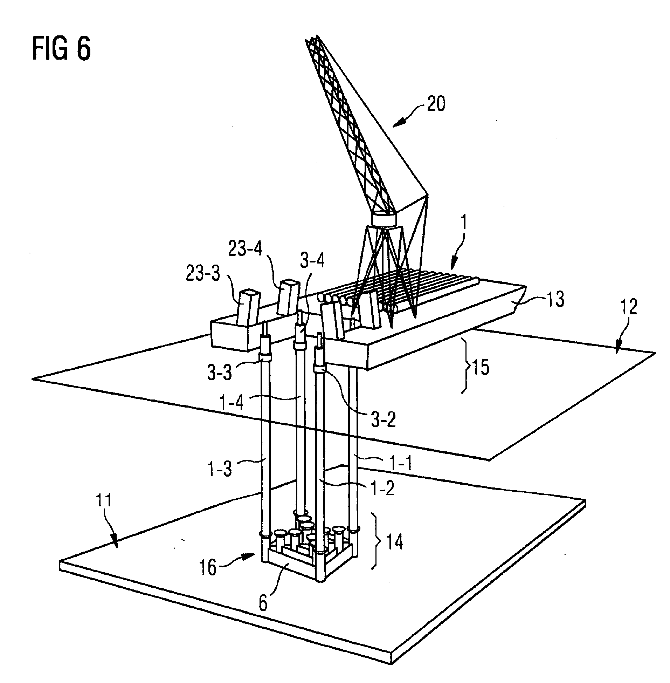

After attaching hammers 3-1, 3-2, 3-3, 3-4 to the piles 1-1, 1-2, 1-3, 1-4, the frame 6, the piles 1-1, 1-2, 1-3, 1-4 and the hammers 3-1, 3-2, 3-3, 3-4 are lowered on the winches 23-1, 23-2, 23-3, 23-4 in the desired drilling field 16 on the seabed 11, as shown in Figure 6. The frame 6 is anchored to the seabed 11 in a stable manner. Usually, the gravity of the frame 6 is sufficient for anchoring the frame 6. The hammers 3-1, 3-2, 3-3, 3-4 are now actuated, by means of which the piles 1-1, 1-2, 1-3, 1-4 are driven with a given velocity into the seabed 11. By means of the frame 6 the four piles 1-1, 1-2, 1-3, 1-4 are driven into the seabed 11 at the prescribed distance d of the frame elements 2-1, 2-2, 2-3, 2-4, which are spaced accordingly relative to each other.

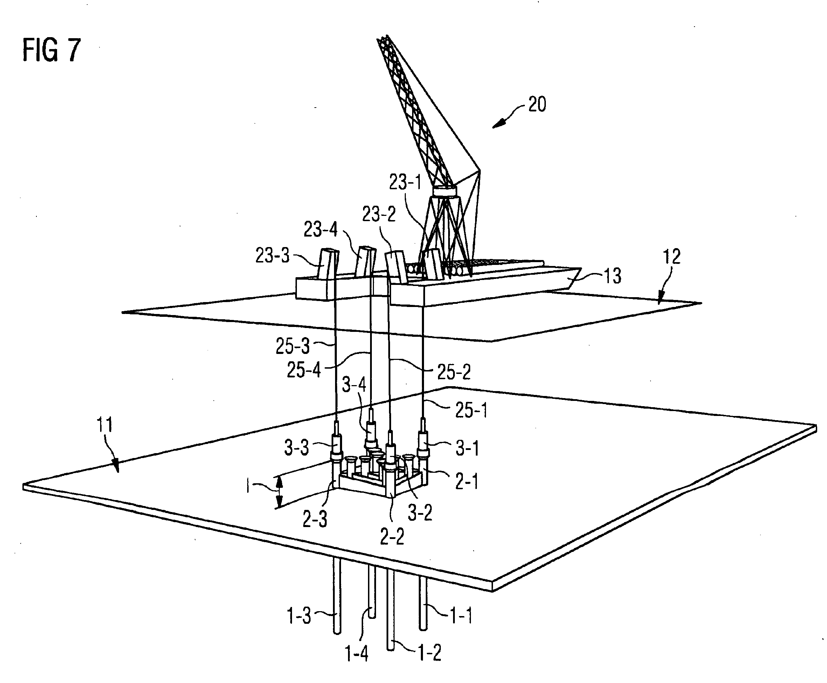

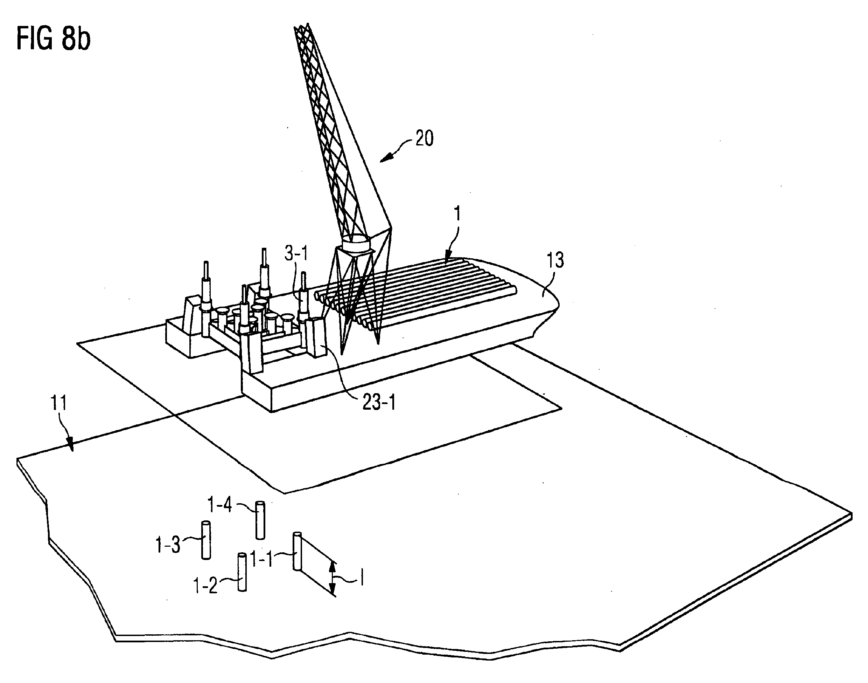

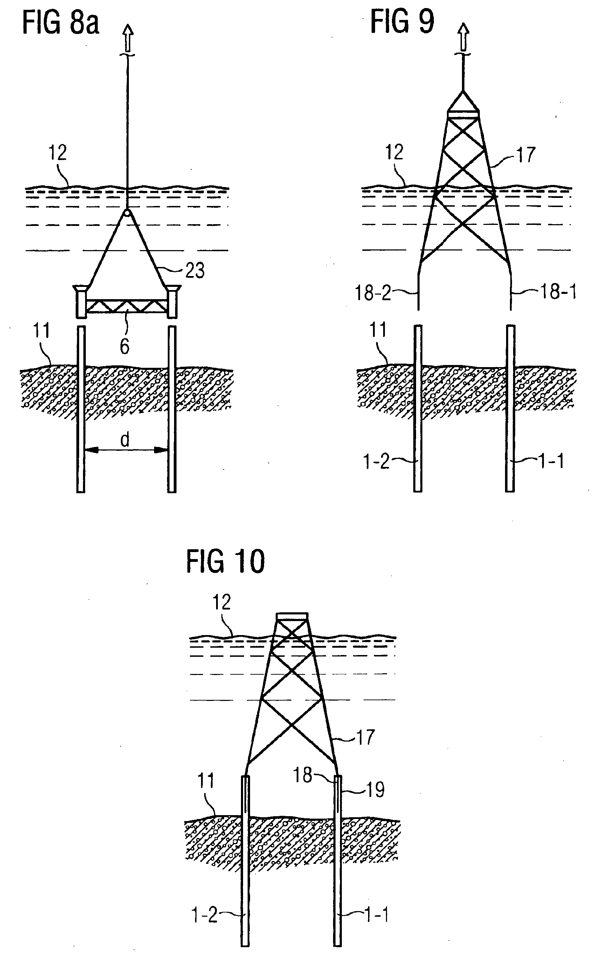

The pile-driving process, that is the operation of the hammers 3-1, 3-2, 3-3, 3-4 is halted when the hammers 3-1, 3-2, 3-3, 3-4 have in each case come into proximity or contact with the frame elements 2-1, 2-2, 2-3, 2-4, as shown in Figure 7. The piles 1-1, 1-2, 1-3, 1-4 are now driven into the seabed 11. The surface-side ends of the piles 1-1, 1-2, 1-3, 1-4 protrudes by a prescribed length 1 from the seabed 11, as shown in Figure 8b. The frame elements 2-1, 2-2, 2-3, 2-4 are now lifted on the winches 23-1, 23-2, 23-3, 23-4 to the hammers 3-1, 3-2, 3-3, 3-4, as shown in schematic form in Figure 8a. The frame elements 2-1, 2-2, 2-3, 2-4 and the hammers 3-1, 3-2, 3-3, 3-4 come into contact with each other at the coupling elements 4,5 shown in the Figures 2 or 3, and where applicable latch into the groove-pin-connection (Figure 7). Now the frame 6 with the hammers 3-1, 3-2, 3-3, 3-4 arranged on it are raised in a lifting process by means of the winches 23-1, 23-2, 23-3, 23-4(Figure 8a). After lifting of the frame 6 with the hammers 3-1, 3-2, 3-3, 3-4 to the seaborne vessel 13, all tools required for driving piles into the seabed 11 are once more on board the seaborne vessel 13, as shown in Figure 8b. The hammers 3-1, 3-2, 3-3, 3-4 are now raised from the frame elements 2-1, 2-2, 2-3, 2-4 by the crane 20 and lifted onto the seaborne vessel 13 in the prescribed storage position.

By means of the method performed with the aid of the above-described device, in particular by means of the process performed in parallel or simultaneously of driving a multiplicity of piles 1-1, 1-2, -3, 1-4 into the seabed 11 and the simultaneous raising of the hammers 3-1, 3-2, 3-3, 3-4 lying on the frame 6 in a lifting process, a considerable time-saving can be achieved. This results in a significant cost-saving, as the seaborne vessels 13 are special-purpose craft, operation of which is subject to high hourly costs.

Figure 9 shows the first method step for positioning a wind turbine substructure here embodied as a lattice construction 17, preferably made of steel, onto the piles 1-1, 1-2 driven into the seabed 11. Alternatively, other wind turbine substructures as concrete or shell construction could be used. On the underside of the lattice construction 17 are arranged lances 18-1, 18-2, 18-3, 18-4, which are introduced into the cavities of the piles 1-1, 1-2, 1-3, 1-4. Here, the lances 18-1, 18-2, 18-3, 18-4 are permanently connected to the piles 1-1, 1-2,1-3, 1-4 with the aid of a connecting structure, for example by means of pointing or cementing. Figure 10 shows the lattice construction 17 in a mounted state on the piles 1-1, 1-2, 1-3, 1-4. A wind power system (not shown) can now for example be attached to the lattice construction 17.

## Claims

1. Method for driving a multiplicity of piles (1) into a seabed (11), in which the following method steps are performed:
a) introduction and fixing of the piles (1, 1-1; 1-2; 1-3; 1-4) at their seabed-side end area (14) into the respective frame elements (2, 2-1; 2-2; 2-3; 2-4) of a frame (6),
b) Fastening of hammers (3, 3-1; 3-2; 3-3; 3-4) to the respective seabed-side end areas (15) of the piles (1, 1-1; 1-2; 1-3; 1-4) in each case assigned to them,
c) Lowering of the frame (6) with the piles (1, 1-1; 1-2; 1-3; 1-4) to the seabed (11), and
d) Driving of the piles (1, 1-1; 1-2; 1-3; 1-4) into the seabed (11) by means of the hammers (3, 3-1; 3-2; 3-3; 3-4), **characterized in that** further the following method steps are performed:
e) Connecting the hammers (3, 3-1; 3-2; 3-3; 3-4) to the frame elements (2, 2-1; 2-2; 2-3; 2-4) by means of mutually corresponding form fitted or force fitted connecting elements assigned to them in each case after driving of the respective pile (1) into the seabed (11), and
f) Lifting of the frame (6) with the hammers (3, 3-1; 3-2; 3-3; 3-4) to the surface (12).

2. The method as claimed in claim 1, **characterized in that** the hammers (3, 3-1; 3-2; 3-3; 3-4) are attached on the top side of the piles, as the frame (6) is lowered to a suitable position.

3. The method as claimed in claim 1 or 2, **characterized in that**
the driving of a multiplicity of piles (1, 1-1; 1-2; 1-3; 1-4) into the seabed (11) is performed in parallel or as the case may be simultaneously.

4. The method as claimed in one of the preceding claims, **characterized in that**
the corresponding form-fitted or force-fitted coupling elements (4,5) are located at the respective facing ends (5) of the hammers (3, 3-1, 3-2, 3-3, 3-4) and the frame elements (2, 2, 2-1; 2-2; 2-3; 2-4).

5. The method as claimed in one of the preceding claims, **characterized in that**
a multiplicity of frame elements (2, 2, 2-1; 2-2; 2-3; 2-4) are in each case at prescribed distances (d, d1, d2) from each other, whereby the piles (1) can be driven into the seabed (11) in a prescribed geometry.

6. The method as claimed in one of the preceding claims, **characterised in that**
the frame (6), the piles (1, 1-1; 1-2; 1-3; 1-4) and the hammers (3, 3-1; 3-2; 3-3; 3-4) are stored on a seaborne vessel (13), conveyed from this to the planned drilling field (16) and there driven into the seabed (11) wherein piles (1, 1-1; 1-2; 1-3; 1-4) for a multiplicity of drilling fields (16) are stored on the seaborne vessel (13).

7. The method as claimed in one of the preceding claims, **characterized in that**
a lattice construction (17) is positioned on the piles (1, 1-1; 1-2; 1-3; 1-4) by means of lances (18-1,18-2,18-3,18-4), and cemented or pointed.

8. Device for driving a multiplicity of pipes/piles (1) into the seabed, in which
a frame (6) is provided, by means of whose frame elements (2, 2, 2-1; 2-2; 2-3; 2-4), which are embodied in cylindrical form, a multiplicity of piles (1, 1-1; 1-2; 1-3; 1-4) can be guided and shifted into place in each case at a prescribed drilling distance (d) and in an axial direction, and
a multiplicity of hammers (3, 3, 3-1; 3-2; 3-3; 3-4) are provided, wherein each hammer (3, 3-1; 3-2; 3-3; 3-4) is suitable for being arranged on an end area of a pile facing away from the seabed (11) (1, 1-1; 1-2; 1-3; 1-4),
**characterized in that**
the respective frame-side ends (5) of the hammers (3, 3-1; 3-2; 3-3; 3-4) and the hammer-side ends (4) of the frame elements (2) have mutually corresponding, mechanically complementary coupling elements (4, 5), wherein the coupling element (5) of the hammer (3, 3-1; 3-2; 3-3; 3-4) has on its face a shape which can be connected to a shape of the face of the coupling element (4) of the frame elements (2, 2-1; 2-2; 2-3; 2-4) in a form fitted or force fitted manner, so that after the driving of the respective pile (1, 1-1; 1-2; 1-3; 1-4) into the seabed (11) the hammers (3, 3-1; 3-2; 3-3; 3-4) rest on the respective frame elements (2) in such a stable manner that the frame (6), together with the hammers (3, 3, 3-1; 3-2; 3-3; 3-4) resting on the frame elements (2, 2, 2-1; 2-2; 2-3; 2-4,) can be raised from the seabed (11) to the surface of the water (12).

9. The device as claimed in claim 8, **characterized in that** the frame (6, 2, 2, 2-1; 2-2; 2-3; 2-4) can be lowered to the seabed (11) and raised to the surface (12) by means of a winch (20) arranged on a seaborne vessel (13).

10. The device as claimed in one of the preceding device claims, **characterized in that**
the coupling element (5) of the hammer (3) has an (x) frustoconical outer surface, which can be positively positioned on the frustoconical inner surface of the coupling elements (4) of the frame element (2) .

11. The device as claimed in one of the preceding device Claims, **characterized in that**
the coupling element (5) of the hammer (3) has on its face a shape embodied as grooves (21), which can be connected to a shape of the face of the coupling element (4) embodied as pins (22) in a form-fitted manner.

12. The device as claimed in one of the preceding device claims, **characterized in that**
the coupling element (5) of the hammer (3) can be connected at its face to the face of the coupling element (4) by means of the weight of the hammer (3) or a force-fitted connection.

13. The device as claimed in one of the preceding device claims, **characterized in that**
the frame (6) can be raised and lowered between the surface (12) and the seabed (11) by means of a winch (10) arranged on a seaborne vessel (13).

14. A method for driving a multiplicity of piles (1) into a seabed (11), wherein
a device as claimed in one of the preceding claims 8 to 13 is used to perform the steps of the method as claimed in one of the preceding claims 1 to 7.

## Patentansprüche

1. Verfahren zum Treiben von mehreren Pfählen (1) in einen Meeresboden (11), wobei die folgenden Verfahrensschritte ausgeführt werden:
a) Einführen und Fixieren der Pfähle (1, 1-1; 1-2; 1-3; 1-4) an ihrem meeresbodenseitigen Endbereich (14) in die/den jeweiligen Rahmenelemente(n) (2, 2-1; 2-2; 2-3; 2-4) eines Rahmens (6),
b) Befestigen von Hämmern (3, 3-1; 3-2; 3-3; 3-4) an den jeweiligen meeresbodenseitigen Endbereichen (15) der Pfähle (1, 1-1; 1-2; 1-3; 1-4), die ihnen jeweils zugeordnet sind,
c) Absenken des Rahmens (6) mit den Pfählen (1, 1-1; 1-2; 1-3; 1-4) auf den Meeresboden (11), und
d) Treiben der Pfähle (1, 1-1; 1-2; 1-3; 1-4) mittels der Hämmer (3, 3-1; 3-2; 3-3; 3-4) in den Meeresboden (11), **dadurch gekennzeichnet, dass** ferner die folgenden Verfahrensschritte ausgeführt werden:
e) Verbinden der Hämmer (3, 3-1; 3-2; 3-3; 3-4) mit den Rahmenelementen (2, 2-1; 2-2; 2-3; 2-4) mittels einander entsprechender formschlüssiger oder kraftschlüssiger Verbindungselemente, die ihnen jeweils zugeordnet sind, nach dem Treiben des jeweiligen Pfahls (1) in den Meeresboden (11), und
f) Heben des Rahmens (6) mit den Hämmern (3, 3-1; 3-2; 3-3; 3-4) an die Oberfläche (12).

2. Verfahren nach Anspruch 1, **dadurch gekennzeichnet, dass** die Hämmer (3, 3-1; 3-2; 3-3; 3-4) an der Oberseite der Pfähle befestigt werden, wenn der Rahmen (6) in eine geeignete Position abgesenkt ist.

3. Verfahren nach Anspruch 1 oder 2, **dadurch gekennzeichnet, dass**
das Treiben von mehreren Pfählen (1, 1-1; 1-2; 1-3; 1-4) in den Meeresboden (11) parallel oder gegebenenfalls gleichzeitig ausgeführt wird.

4. Verfahren nach einem der vorhergehenden Ansprüche, **dadurch gekennzeichnet, dass**
die entsprechenden formschlüssigen oder kraftschlüssigen Kopplungselemente (4, 5) an den jeweiligen einander zugewandten Enden (5) der Hämmer (3, 3-1; 3-2; 3-3; 3-4) und der Rahmenelemente (2, 2, 2-1; 2-2; 2-3; 2-4) angeordnet sind.

5. Verfahren nach einem der vorhergehenden Ansprüche, **dadurch gekennzeichnet, dass**
mehrere Rahmenelemente (2, 2, 2-1; 2-2; 2-3; 2-4) jeweils in vorgeschriebenen Abständen (d, d1, d2) voneinander angeordnet sind, wodurch die Pfähle (1) in einer vorgeschriebenen Geometrie in den Meeresboden (11) getrieben werden können.

6. Verfahren nach einem der vorhergehenden Ansprüche, **dadurch gekennzeichnet, dass**
der Rahmen (6), die Pfähle (1, 1-1; 1-2; 1-3; 1-4) und die Hämmer (3, 3-1; 3-2; 3-3; 3-4) auf einem Seefahrzeug (13) gelagert werden, von diesem zu dem geplanten Bohrfeld (16) transportiert werden und dort in den Meeresboden (11) getrieben werden, wobei Pfähle (1, 1-1; 1-2; 1-3; 1-4) für mehrere Bohrfelder (16) auf dem Seefahrzeug (13) gelagert werden.

7. Verfahren nach einem der vorhergehenden Ansprüche, **dadurch gekennzeichnet, dass**
eine Gitterkonstruktion (17) mithilfe von Lanzen (18-1, 18-2, 18-3, 18-4) auf den Pfählen (1, 1-1; 1-2; 1-3; 1-4) positioniert und durch Verkitten oder Ausfugen mit ihnen verbunden wird.

8. Vorrichtung zum Treiben von mehreren Rohren/Pfählen (1) in den Meeresboden, wobei
ein Rahmen (6) mithilfe von Rahmenelementen (2, 2, 2-1; 2-2; 2-3; 2-4) desselben vorgesehen ist, welche in zylindrischer Form ausgeführt sind, mehrere Pfähle (1, 1-1; 1-2; 1-3; 1-4) jeweils geführt und in einem vorgeschriebenen Bohrabstand (d) und in einer axialen Richtung in die erforderliche Position geschoben werden können, und
mehrere Hämmer (3, 3, 3-1; 3-2; 3-3; 3-4) vorgesehen sind, wobei jeder Hammer (3, 3-1; 3-2; 3-3; 3-4) geeignet ist, an einem von dem Meeresboden (11) abgewandten Endbereich eines Pfahls (1, 1-1; 1-2; 1-3; 1-4) angeordnet zu werden,
**dadurch gekennzeichnet, dass**
die jeweiligen rahmenseitigen Enden (5) der Hämmer (3, 3-1; 3-2; 3-3; 3-4) und die hammerseitigen Enden (4) der Rahmenelemente (2) einander entsprechende, mechanisch komplementäre Kopplungselemente (4, 5) aufweisen, wobei das Kopplungselement (5) des Hammers (3, 3-1; 3-2; 3-3; 3-4) auf seiner Stirnseite eine Form aufweist, welche mit einer Form der Stirnseite des Kopplungselements (4) der Rahmenelemente (2, 2-1; 2-2; 2-3; 2-4) auf eine formschlüssige oder kraftschlüssige Weise verbunden werden kann, sodass nach dem Treiben des jeweiligen Pfahls (1, 1-1; 1-2; 1-3; 1-4) in den Meeresboden (11) die Hämmer (3, 3-1; 3-2; 3-3; 3-4) auf den jeweiligen Rahmenelementen (2) auf eine solch stabile Weise ruhen, dass der Rahmen (6), zusammen mit den auf den Rahmenelementen (2, 2, 2-1; 2-2; 2-3; 2-4) ruhenden Hämmern (3, 3, 3-1; 3-2; 3-3; 3-4), von dem Meeresboden (11) an die Oberfläche des Wassers (12) gehoben werden kann.

9. Vorrichtung nach Anspruch 8, **dadurch gekennzeichnet, dass** der Rahmen (6, 2, 2, 2-1; 2-2; 2-3; 2-4) mittels einer Winde (20), die auf einem Seefahrzeug (13) angeordnet ist, auf den Meeresboden (11) gesenkt und an die Oberfläche (12) gehoben werden kann.

10. Vorrichtung nach einem der vorhergehenden Vorrichtungsansprüche, **dadurch gekennzeichnet, dass** das Kopplungselement (5) des Hammers (3) eine (x) kegelstumpfförmige Außenfläche aufweist, welche formschlüssig auf der kegelstumpfförmigen Innenfläche der Kopplungselemente (4) des Rahmenelements (2) positioniert werden kann.

11. Vorrichtung nach einem der vorhergehenden Vorrichtungsansprüche, **dadurch gekennzeichnet, dass** das Kopplungselement (5) des Hammers (3) auf seiner Stirnseite eine als Kerben (21) ausgebildete Form aufweist, welche mit einer als Stifte (22) ausgebildeten Form der Stirnseite des Kopplungselements (4) formschlüssig verbunden werden kann.

12. Vorrichtung nach einem der vorhergehenden Vorrichtungsansprüche, **dadurch gekennzeichnet, dass** das Kopplungselement (5) des Hammers (3) an seiner Stirnseite mit der Stirnseite des Kopplungselements (4) mittels des Gewichts des Hammers (3) oder einer kraftschlüssigen Verbindung verbunden werden kann.

13. Vorrichtung nach einem der vorhergehenden Vorrichtungsansprüche, **dadurch gekennzeichnet, dass** der Rahmen (6) zwischen der Oberfläche (12) und dem Meeresboden (11) mittels einer Winde (10), die auf einem Seefahrzeug (13) angeordnet ist, gehoben und gesenkt werden kann.

14. Verfahren zum Treiben von mehreren Pfählen (1) in einen Meeresboden (11), wobei
eine Vorrichtung nach einem der vorhergehenden Ansprüche 8 bis 13 verwendet wird, um die Schritte des Verfahrens nach einem der vorhergehenden Ansprüche 1 bis 7 auszuführen.

## Revendications

1. Procédé pour entraîner une multiplicité de piles (1) au fond de la mer (11), dans lequel les étapes de procédé suivantes sont effectuées :
a) introduction et fixation des piles (1, 1-1 ; 1-2 ; 1-3 ; 1-4) au niveau de leur surface d'extrémité (14) du côté du fond de la mer dans les éléments de cadre respectifs (2, 2-1 ; 2-2 ; 2-3 ; 2-4) d'un cadre (6),
b) fixation de masses (3, 3-1 ; 3-2 ; 3-3 ; 3-4) aux surfaces d'extrémité respectives (15) du côté du fond de la mer des piles (1, 1-1 ; 1-2 ; 1-3 ; 1-4) qui leur sont affectées dans chaque cas,
c) abaissement du cadre (6) avec les piles (1, 1-1 ; 1-2 ; 1-3 ; 1-4) vers le fond de la mer (11), et
d) entraînement des piles (1, 1-1 ; 1-2 ; 1-3 ; 1-4) au fond de la mer (11) au moyen des masses (3, 3-1 ; 3-2 ; 3-3 ; 3-4), **caractérisé en ce qu'**en outre les étapes de procédé suivantes sont effectuées :
e) raccordement des masses (3, 3-1 ; 3-2 ; 3-3 ; 3-4) aux éléments de cadre (2, 2-1 ; 2-2 ; 2-3 ; 2-4) au moyen d'éléments de raccordement à complémentarité de formes ou à complémentarité de forces correspondant mutuellement qui leur sont affectés dans chaque cas après l'entraînement de la pile respective (1) au fond de la mer (11) et
f) levage du cadre (6) avec les masses (3, 3-1 ; 3-2 ; 3-3 ; 3-4) vers la surface (12).

2. Procédé selon la revendication 1, **caractérisé en ce que** les masses (3, 3-1 ; 3-2 ; 3-3 ; 3-4) sont fixées sur le côté supérieur des piles, tandis que le cadre (6) est abaissé jusqu'à une position adéquate.

3. Procédé selon la revendication 1 ou 2, **caractérisé en ce que**
l'entraînement d'une multiplicité de piles (1, 1-1 ; 1-2 ; 1-3 ; 1-4) au fond de la mer (11) est réalisé en parallèle ou selon le cas simultanément.

4. Procédé selon l'une des revendications précédentes, **caractérisé en ce que**
les éléments de couplage à complémentarité de formes ou à complémentarité de forces correspondants (4, 5) sont situés au niveau des extrémités respectives se faisant face (5) des masses (3, 3-1, 3-2, 3-3, 3-4) et des éléments de cadre (2, 2-1 ; 2-2 ; 2-3 ; 2-4).

5. Procédé selon l'une des revendications précédentes, **caractérisé en ce qu'**
une multiplicité d'éléments de cadre (2, 2-1 ; 2-2 ; 2-3 ; 2-4) sont dans chaque cas à des distances prescrites (d, d1, d2) les uns des autres, moyennant quoi les piles (1) peuvent être entraînées au fond de la mer (11) selon une géométrie prescrite.

6. Procédé selon l'une des revendications précédentes, **caractérisé en ce que**
le cadre (6), les piles (1, 1-1 ; 1-2 ; 1-3 ; 1-4) et les masses (3, 3-1 ; 3-2 ; 3-3 ; 3-4) sont stockés sur un navire (13), transportés jusqu'au champ de forage prévu (16) et sur place entraînés au fond de la mer (11), les piles (1, 1-1 ; 1-2 ; 1-3 ; 1-4) pour une multiplicité de champs de forage (16) étant stockées sur le navire (13).

7. Procédé selon l'une des revendications précédentes, **caractérisé en ce qu'**
une construction de type grille (17) est positionnée sur les piles (1, 1-1 ; 1-2 ; 1-3 ; 1-4) au moyen de lances (18-1, 18-2, 18-3, 18-4), et cimentée ou jointoyée.

8. Dispositif pour entraîner une multiplicité de conduites/piles (1) au fond de la mer, dans lequel
un cadre (6) est fourni, au moyen de ses éléments de cadre (2, 2-1 ; 2-2 ; 2-3 ; 2-4), qui sont représentés sous forme cylindrique, une multiplicité de piles (1, 1-1 ; 1-2 ; 1-3 ; 1-4) peuvent être guidées et mises en place dans chaque cas à une distance de forage prescrite (d) et dans une direction axiale, et
une multiplicité de masses (3, 3-1 ; 3-2 ; 3-3 ; 3-4) sont fournies, chaque masse (3, 3-1 ; 3-2 ; 3-3 ; 3-4) étant adéquate pour être disposée sur une surface d'extrémité d'une pile opposée au fond de la mer (11) (1, 1-1 ; 1-2 ; 1-3 ; 1-4),
**caractérisé en ce que**
les extrémités côté cadre respectives (5) des masses (3, 3-1 ; 3-2 ; 3-3 ; 3-4) et les extrémités côté masse (4) des éléments de cadre (2) ont des éléments de couplage mécaniquement complémentaires (4, 5) correspondant mutuellement, l'élément de couplage (5) de la masse (3, 3-1 ; 3-2 ; 3-3 ; 3-4) ayant sur sa face une forme qui peut être raccordée à une forme de la face de l'élément de couplage (4) des éléments de cadre (2, 2-1 ; 2-2 ; 2-3 ; 2-4) par complémentarité de formes ou par complémentarité de forces, de sorte qu'après l'entraînement de la pile respective (1, 1-1 ; 1-2 ; 1-3 ; 1-4) au fond de la mer (11) les masses (3, 3-1 ; 3-2 ; 3-3 ; 3-4) reposent sur les éléments de cadre respectifs (2) de manière stable de telle sorte que le cadre (6), conjointement avec les masses (3, 3-1 ; 3-2 ; 3-3 ; 3-4) reposant sur les éléments de cadre (2, 2-1 ; 2-2 ; 2-3 ; 2-4), peut être soulevé du fond de la mer (11) vers la surface de l'eau (12).

9. Dispositif selon la revendication 8, **caractérisé en ce que** le cadre (6, 2, 2-1 ; 2-2 ; 2-3 ; 2-4) peut être abaissé vers le fond de la mer (11) et soulevé vers la surface (12) au moyen d'un treuil (20) disposé sur un navire (13).

10. Dispositif selon l'une des revendications précédentes, **caractérisé en ce que**
l'élément de couplage (5) de la masse (3) a une surface extérieure tronconique (x), qui peut être positionnée de manière positive sur la surface intérieure tronconique des éléments de couplage (4) de l'élément de cadre (2).

11. Dispositif selon l'une des revendications précédentes, **caractérisé en ce que**
l'élément de couplage (5) de la masse (3) a sur sa face une forme représentée sous forme de rainures (21), qui peuvent être raccordées à une forme de la face de l'élément de couplage (4) représentée sous la forme de broches (22) par complémentarité de formes.

12. Dispositif selon l'une des revendications précédentes, **caractérisé en ce que**
l'élément de couplage (5) de la masse (3) peut être raccordé au niveau de sa face à la face de l'élément de couplage (4) au moyen du poids de la masse (3) ou d'un raccordement par complémentarité de forces.

13. Dispositif selon l'une des revendications précédentes, **caractérisé en ce que**
le cadre (6) peut être soulevé et abaissé entre la surface (12) et le fond de la mer (11) au moyen d'un treuil (10) disposé sur un navire (13).

14. Procédé pour entraîner une multiplicité de piles (1) au fond de la mer (11), dans lequel
un dispositif selon l'une des revendications précédentes 8 à 13 est utilisé pour réaliser les étapes du procédé selon l'une des revendications précédentes 1 à 7.
